# EUROPEAN PATENT APPLICATION

(11) **EP 1 343 032 A1**
(43) Date of publication of application: **10.09.2003**
(21) Application number: 02005053.0
(22) Date of filing: 06.03.2002
(51) Int. Cl.: G02B 6/16, G02B 6/22

(54) **Dispersion compensating fiber with reduced splice loss and methods for making same**

(71) Applicant: FITEL USA CORPORATION (a Delaware Corporation), Norcross, Georgia 30071 (US)
(72) Inventor: Edvold, Bent, 2625 Vallensbaek (DK); Gruner-Nielsen, Lars, 2700 Broenshoej (DK); Knudsen,Sting Nissen, 2000 Frederiksberg (DK); Veng,Torben Erik, 4000 Roskilde (DK)
(74) Representative: Schoppe, Fritz, Dipl.-Ing.

(57) **Abstract**

A dispersion compensating fiber is described having a core and cladding. The cladding has a first cladding region surrounding the core, a second cladding region surrounding the first cladding layer, and a third cladding region surrounding the second cladding layer. The core, and the first, second, and third cladding regions are doped to create a refraction index profile characteristic of dispersion compensating fiber. A portion of the cladding is doped with phosphorus, thereby resulting in splice loss reduction.

## Description

### BACKGROUND OF THE INVENTION

### Field of the Invention

The present invention relates generally to improvements to optical fiber, and more particularly to advantageous aspects of a dispersion-compensating fiber with reduced splice loss and methods for making same.

### Description of the Prior Art

A new class of optical fibers has recently been developed known as dispersion-compensating fiber (DCF), which has a steeply sloped, negative dispersion characteristic. One use for DCF is to optimize the dispersion characteristics of already existing optical fiber links fabricated from standard single-mode fibers (SSMF) for operation at a different wavelength. This technique is disclosed in United States Patent Application Serial No. 09/596,454, filed on June 19, 2000, assigned to the assignee of the present application, the drawings and disclosure of which are hereby incorporated by reference in their entirety.

An important parameter for DCF is the excess loss that results when DCF is spliced to SSMF. To obtain a highly negative dispersion, DCF uses a small core with a high refractive index, having a mode-field diameter of approximately 5.0 µm at 1550 nm, compared with the approximately 10.5 µm mode-field diameter of SSMF at 1550 nm. The difference in core diameters results in significant signal loss when a fusion splicing technique is used to connect DCF to SSMF. It is possible to reduce the amount of signal loss by choosing splicing parameters that allow the core of the DCF to diffuse, thereby causing the mode-field diameter of the DCF core to taper outwards, resulting in a funneling effect. However, the amount and duration of the heat required to produce the funneling effect result in an undesirable diffusion of fluorine dopant in cladding surrounding the DCF core. This fluorine diffusion limits the amount of splice loss reduction that can be obtained using a mode-field expansion technique.

There is thus a need for improved techniques for splicing DCF to SSMF that reduces splice loss below current limits.

### SUMMARY OF THE INVENTION

The above-described issues and others are addressed by the present invention, one aspect of which provides a dispersion compensating fiber having a core and cladding. The cladding has a first cladding region surrounding the core, a second cladding region surrounding the first cladding layer, and a third cladding region surrounding the second cladding layer. The core, and the first, second, and third cladding regions are doped to create a refraction index profile characteristic of dispersion compensating fiber. In addition, a portion of the cladding is doped with phosphorus, thereby resulting in splice loss reduction.

Additional features and advantages of the present invention will become apparent by reference to the following detailed description and accompanying drawings.

### BRIEF DESCRIPTION OF THE DRAWINGS

Fig. 1 shows a cross section of a length of DCF.
Fig. 2 shows a refractive index profile of the length of DCF shown in Fig. 1.
Fig. 3 shows the central section of the refractive index profile shown in Fig. 2 that has been re-scaled for the purposes of illustration.
Fig. 4 shows a refractive index profile illustrating an optical fiber with reduced splice loss according to a first aspect of the present invention.
Fig. 5 shows a refractive index profile illustrating an optical fiber with reduced splice loss according to a second aspect of the present invention.
Fig. 6 shows a refractive index profile illustrating an optical fiber with reduced splice loss according to a third aspect of the present invention.
Fig. 7 shows a table setting forth splice loss data for a length of DCF, without phosphorus in its cladding.
Fig. 8 shows a table setting forth splice loss data for a length of DCF fabricated in accordance with the aspect of the invention illustrated in Fig. 4.
Fig. 9 shows a flowchart of a method according to a further aspect of the present invention.

### DETAILED DESCRIPTION

One aspect of the present invention provides a technique for reducing splice loss when a dispersion compensating fiber (DCF) is spliced using a fusion splicer. The techniques described herein are suitable for reducing splice loss when DCF is spliced to itself, or spliced to other kinds of fibers, such as a single-mode standard fiber (SSMF) using the so-called bridge splicing technique where a bridge fiber is spliced between lengths of DCF and SSMF to reduce overall splice loss. One such bridge splicing technique is described in United States Patent Application No. 09/667,031, filed on September 21, 2000, owned by the assignee of the present application, the drawings and disclosure of which are incorporated herein in their entirety. In one embodiment of the present invention, splice loss reduction is achieved by doping the DCF cladding with phosphorus to soften the glass near the core region so that stress effects after splicing are reduced. It will be appreciated that the techniques described herein may also be applicable to fiber designs other than DCF designs.

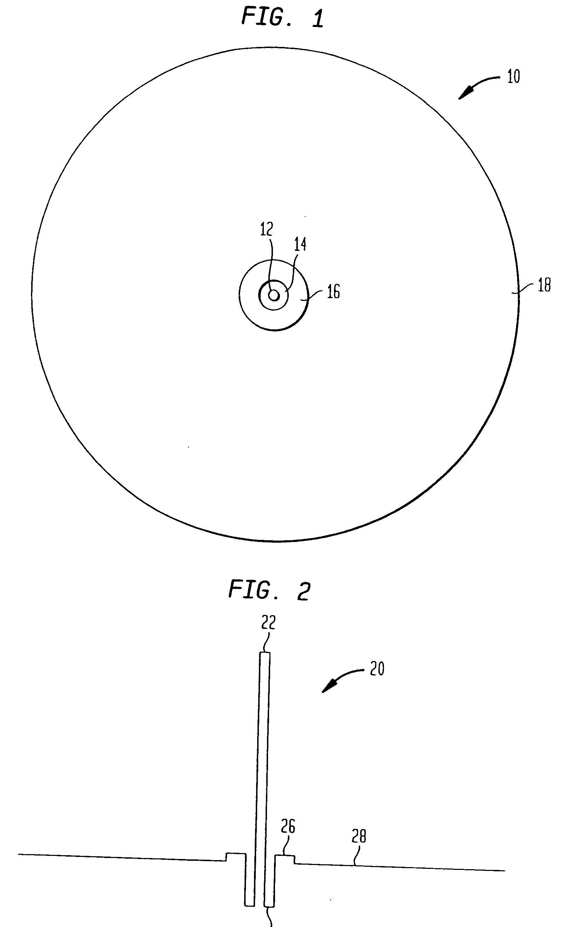

In general, DCF is difficult to splice because of its refractive index (RI) profile. Fig. 1 shows a cross section of a sample of a typical DCF 10, and Fig. 2 shows the Refractive Index profile 20 corresponding to the DCF 10 shown in Fig. 1. As shown in Fig. 1, the DCF includes a core 12, surrounded by a cladding that includes first, second, and third cladding regions 14, 16, and 18. As shown in Fig. 2, the RI profile includes a central spike 22 corresponding to the DCF core 12, a trench 24 on either side of the spike 22 corresponding to the first cladding region 14, a ridge 26 on either side of each trench 24 corresponding to the second cladding region 16, and a flat section 28 on either side of each ridge 26 corresponding to the third cladding region 18.

DCF is typically fabricated from a silicon dioxide (SiO₂) based glass. The desired RI profile is achieved by doping the core 12 and cladding regions 14, 16, and 18, with suitable dopants. In one DCF design, the core 12 is doped with germanium (Ge), the first cladding region is doped with fluorine (F), and the second cladding region is doped with germanium and fluorine (G/F).

To obtain a sufficiently deep trench 24 on either side of the core 22, the first cladding region 14 is doped with a relatively high concentration of fluorine dopant. Because fluorine starts to diffuse at a much lower temperature than the typical temperatures reached during fusion splicing, a significant amount of fluorine diffusion may occur during a typical fusion splicing operation. This diffusion results in a relatively high splice loss unless very short fusion times are used.

However, it is sometimes desirable to use longer fusion times. In one DCF design, the spotsize is approximately 5µm, whereas a typical spotsize for SSMF is 10µm. The difference in spotsize complicates the process of splicing DCF to SSMF. One technique used to compensate for a difference in spotsize is to use a longer fusion time. A longer fusion time results in a mode-field expansion in the DCF. By controlling the length of the fusion time, it is possible to control the amount of mode-field expansion in order to overcome the problem of mode-field mismatch. However, the longer fusion times required for mode-field expansion as noted above may result in undesirable diffusion of the fluorine dopant in the DCF cladding.

One solution to this problem, described in United States Patent Application Serial No. 09/667,031, is to introduce a bridge fiber (BF) between the DCF and SSMF. The BF has the same spotsize as the DCF, but is not as heavily fluorine-doped as the DCF. Thus, the BF can be spliced to the DCF without any mode-field expansion. Because a short fusion time can be used, the problem of fluorine diffusion is avoided. When splicing the BF to SSMF, longer fusion times are then used to induce the desired mode-field expansion in the BF at the splice point between the BF and the SSMF. As a result of introducing the BF, the total splice loss between the DCF and SSMF is reduced.

However, even for BFs and DCFs having the same spotsize, significant splice loss values are observed when these fibers are spliced together. One explanation for these splice losses is the stress effects of the splicing process. According to the present invention, a significant reduction in this loss can be obtained by introducing phosphorus (P) into one or more of the cladding regions 14, 16, 18. The introduction of phosphorus softens the glass, thereby reducing the stress effects.

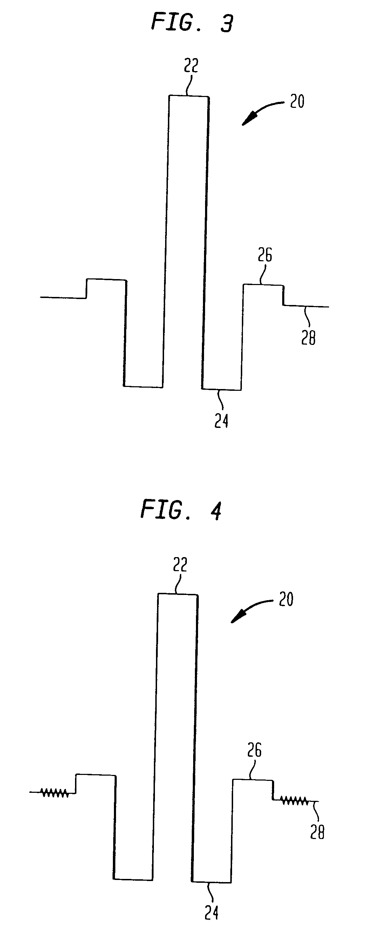

Figs. 3 through 7 illustrate different exemplary combinations of how phosphorus may be satisfactorily introduced into the DCF in accordance with the present invention. It should be noted that because phosphorus doping affects propagation losses, there will be a tradeoff between improvement of splicing properties and propagation losses. Phosphorus can be introduced into the DCF using a modified chemical vapor deposition (MCVD) technique, in which core dopants are deposited in a quartz tube to define the preform that is then drawn into the finished fiber. Phosphorus is introduced by purging a flow of POC13 through the preform tube during the MCVD process when the relevant layers are deposited. Satisfactory results have been obtained using a concentration of 1 % P205 (weight), although the present invention is not restricted to this particular concentration of phosphorus, or the particular technique used to introduce phosphorus into the DCF.

Fig. 3 shows the central section of the RI profile shown in Fig. 2. For purposes of illustration, the RI profile has been re-scaled. It will be recalled from the above discussion that each location on the RI profile corresponds to a region of the DCF. The central spike 22 corresponds to the DCF core 12, the trenches 24 on either side of the central spike 22 correspond to the first cladding region 14, the ridges 26 on either side of each trench 24 correspond to the second cladding region 16, and the flat sections 28 on either side of each ridge 26 correspond to the third cladding region 18. Also, as mentioned above, the core 12 (spike 22) in the illustrated DCF design is doped with germanium, the first cladding region 14 (trench 24) is doped with fluorine, and the second cladding region 16 (ridge 26) is doped with germanium and fluorine.

In one embodiment of the present invention, illustrated in Fig. 4, phosphorus (indicated by cross-hatching in flat section 28) is introduced into the third cladding region 18. According to a further aspect of the invention, whenever the third cladding region 18 is doped with phosphorus, it is also doped with fluorine in order to cancel out the increase in refractive index induced by the phosphorus.

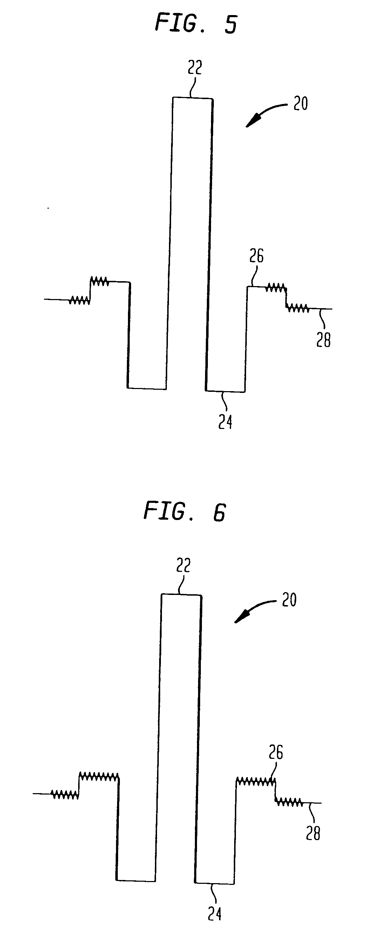

In a second embodiment of the present invention, illustrated in Fig. 5, phosphorus is introduced into a region of the DCF that overlaps the second and third cladding regions 16 and 18 (indicated by cross-hatching in ridge 26 and flat section 28). Thus, the outer portion of the second cladding region 16 is doped with germanium, fluorine and phosphorus, and the third cladding region 18 is doped with fluorine and phosphorus. The phosphorus doping of the third cladding region 18 may extend throughout the third cladding region 28 or may be confined to an inner portion of the third cladding region 18.

In a third embodiment of the present invention, illustrated in Fig. 6, phosphorus is introduced throughout the second cladding region 16 corresponding to ridge 26 and, extending into the third cladding region 18 (indicated by cross-hatching). Thus, the entire second cladding region is now doped with phosphorus, fluorine, and germanium, and the third cladding region 18 is doped with phosphorus and fluorine. Again, the phosphorus doping of the third cladding region 18 may extend throughout the third cladding region 18 or may be confined to an inner portion of the third cladding region 18.

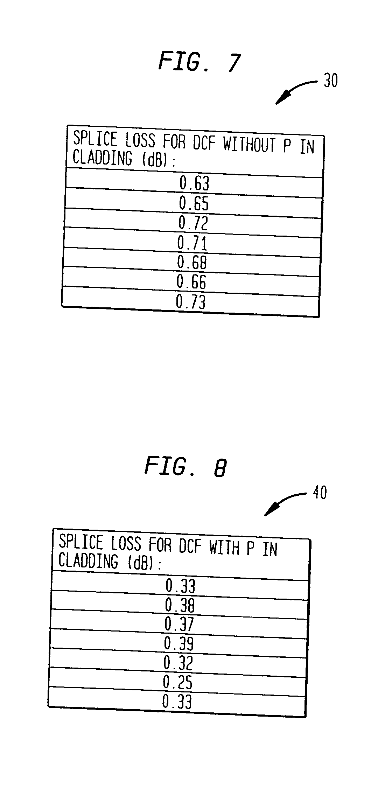

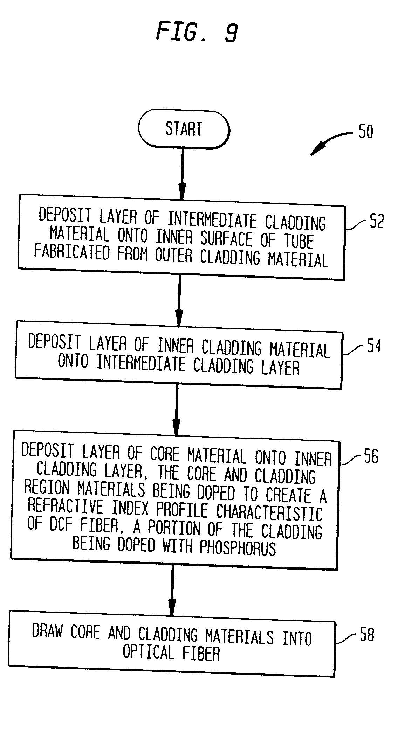

Figs. 7 and 8 show tables 30 and 40, comparing splice loss at 1550 nm for an x3 DCF design manufactured at Lucent Technologies Denmark A/S. The Fig. 7 table 30 shows splice loss data for a x3 DCF without phosphorus in the cladding, and the Fig. 8 table 40 shows splice loss data for the same x3 DCF design with phosphorus added to the cladding according to the technique illustrated in Fig. 4 and discussed above. In order to provide a valid comparison of the two DCFs, the same BF was used for both tests. In other words, one of the two DCFs was spliced to a length of BF and tested for splice loss. The first DCF was then cut away from the BF. Then, the second DCF was spliced to the same BF and tested for splice loss. The increment in propagation loss due to the modification was below 0.01 dB/km. As shown in Fig. 7 and Fig. 8, the addition of phosphorus to the cladding results in a significant decrease in splice loss.

Fig. 9 shows a flowchart of a method 50 for fabricating a DCF according to a further aspect of the present invention. In the present embodiment of the invention, the DCF is fabricated using a modified chemical vapor deposition (MCVD) technique. It would also be possible to use other suitable techniques, including, but not limited to, outside vapor deposition (OVD), and vapor axial deposition (VAD). According to the MCVD technique, the core and cladding materials are deposited as soot layers onto the interior surface of a tube fabricated from silica glass, quartz, or other suitable material. The core and cladding materials are then heated and drawn into optical fiber, with the tube forming an outer cladding region in the finished fiber. For the purposes of the present discussion, the first, second, and third cladding regions are here referred to respectively as inner, intermediate, and outer cladding regions or layers.

As shown in Fig. 9, in step 52, an intermediate cladding material is deposited as a layer of soot onto the inner surface of a tube fabricated from the outer cladding material. In step 54, the inner cladding material is deposited as a soot layer onto the intermediate cladding material. In step 56, the core material is deposited as a soot layer onto the inner cladding material. The core and cladding materials are doped to create a refractive index profile characteristic of DCF. A portion of the cladding is doped with phosphorus, as described above. In step 58, the core and cladding materials are heated and drawn into optical fiber.

While the foregoing description includes details which will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto and that the claims be interpreted as broadly as permitted by the prior art.

## Claims

1. A dispersion compensating fiber (10), comprising:
a core (12),
cladding, including a first cladding region (14) surrounding the core, a second cladding region (16) surrounding the first cladding layer, and a third cladding region (18) surrounding the second cladding layer,
the core, and the first, second, and third cladding regions being doped to create a refraction index profile characteristic of dispersion compensating fiber, the dispersion compensating fiber **characterized by**,
a portion of the cladding being doped with phosphorus, thereby resulting in splice loss reduction.

2. The dispersion compensating fiber of claim 1, wherein the third cladding region (18) is doped with phosphorus, or wherein a portion of the cladding overlapping the second and third cladding regions is doped with phosphorus.

3. The dispersion compensating fiber of claim 2, wherein the third cladding region (18) is also doped with fluorine to cancel out an increase in refractive index induced by the phosphorus doping.

4. The dispersion compensating fiber of claim 1, wherein a portion of the cladding including the second cladding region and extending into the third cladding region is doped with phosphorus.

5. The dispersion compensating fiber of claim 1, wherein the core (12) is doped with germanium, the first cladding region is doped with fluorine, and the second cladding region is doped with germanium and fluorine.

6. A method for fabricating dispersion compensating fiber, comprising:
(a) depositing a layer of intermediate cladding material onto an inner surface of a tube fabricated from an outer cladding material;
(b) depositing a layer of inner cladding material onto the layer of intermediate cladding material;
(c) depositing a layer of core material onto the layer of inner cladding material; and
(d) drawing the core cladding material into optical fiber, the core and cladding materials being doped to create a refraction index profile characteristic of dispersion compensating fiber, the method **characterized by** a portion of the cladding being doped with phosphorus, thereby resulting in a reduction of splice loss.

7. The method of claim 6, wherein the outer cladding material is doped with phosphorus, or wherein a portion of the cladding including the intermediate cladding layer second cladding region and extending into the outer cladding material is doped with phosphorus.

8. The method of claim 7, wherein the outer cladding material is also doped with fluorine in order to cancel out an increase in refractive index induced by the phosphorus doping.

9. The method of claim 6, wherein a portion of the cladding material overlapping the intermediate and outer cladding layers is doped with phosphorus.

10. The method of claim 6, wherein the core material is doped with germanium, the inner cladding layer is doped with fluorine, and the intermediate cladding layer is doped with germanium and fluorine.
